# EUROPEAN PATENT SPECIFICATION

(11) **EP 3 693 283 B1**
(45) Date of publication and mention of the grant of the patent: **19.02.2025**
(21) Application number: 18864734.1
(22) Date of filing: 27.09.2018
(51) Int. Cl.: B65D 1/02, B65D 1/32, B65D 83/00, B65D 85/72

(54) **SYNTHETIC RESIN MULTILAYER BOTTLE**
MEHRSCHICHTIGE FLASCHE AUS KUNSTHARZ
BOUTEILLE MULTICOUCHE EN RÉSINE SYNTHÉTIQUE

(30) Priority: 06.10.2017 JP 2017195645
(43) Date of publication of application: 12.08.2020
(73) Proprietor: Kikkoman Corporation, Noda-shi, Chiba 278-8061 (JP)
(72) Inventor: NAKAHASHI, Takahiro, Ohra-gun Gunma 370-0723 (JP); MANNEN, Natsuyuki, Noda-shi Chiba 278-8601 (JP); KUWAGAKI, Denmi, Noda-shi Chiba 278-8601 (JP)
(74) Representative: Schön, Christoph
(86) International application number: PCT/JP2018/036032
(87) International publication number: WO 2019/069794

(56) References cited:
- EP-A1- 3 608 240
- JP-A- 2007 522 049
- JP-A- 2017 065 712
- JP-A- 2017 065 712
- US-A1- 2012 219 670

## Description

### Technical Field

The present invention relates to a synthetic resin multilayer bottle.

### Background Art

Hitherto, there has been known a synthetic resin multilayer bottle in which an inner container body that deforms due to a volume reduction caused by pressing (hereinafter referred to as "the volume reduction deformation" in some cases) is placed inside an outer shell bottle capable of restoring the original shape thereof in response to deformation attributable to pressing, and outside air is introduced between the outer shell bottle and the inner container body (refer to, for example, Patent Literature 1).

In the synthetic resin multilayer bottle, when the trunk part of the outer shell bottle is pressed, the inner container body is deformed due to a volume reduction so as to pour out a content, which is held in the inner container body, through an opening part. When the pressing pressure is released, outside air is introduced between the outer shell bottle and the inner container body by the action of a check valve that is separately provided. As a result, the external air pressure causes the outer shell bottle to restore the original shape thereof, while the inner container body is maintained in the state of the volume reduction deformation. At this time, the outside air does not enter into the inner container body through the opening part, so that it is considered possible to prevent the content held in the inner container body from deteriorating due to oxygen in the outside air.

### Citation List

### Patent Literature

Patent Literature 1: Japanese Patent Application Laid-Open No. 2017-065712
EP 3 608 240 A1 which is to be considered a prior art document pursuant to Article 54(3) EPC as far as the priority of JP 2017 075276 filed on April 5, 2017 is validly claimed, discloses a container comprising a container body including a flexible inner container configured to be filled with content and to deflate as the content decreases, an outer container encompassing the inner container and having an intake hole through which external air is taken into a space between the inner container and the outer container, a discharge cap including a top surface part having a discharge port through which the content is discharged, wherein the discharge cap being mounted on a mouth portion of the container body, and an external air introduction hole that provides communication between the outside and the intake hole.
JP 2017 065712 A discloses a synthetic resin-made multiple bottle including an outer shell bottle and an inner container body, wherein the outer shell bottle comprises a cylindrical outer opening, a pyramidal shoulder, a polygonal cylindrical upper trunk, a middle trunk, a polygonal cylindrical lower trunk and a bottom, and wherein the inner container body comprises a cylindrical inner opening arranged at the inner peripheral side of the outer opening, an inner container body having a shape following the inner surface shape of the outline bottle, and an air passage formed between the outer opening and the inner opening.

### Summary of Invention

### Technical Problem

However, the synthetic resin multilayer bottle described in Patent Literature 1 has inconvenience that the oxygen in the outside air introduced between the outer shell bottle and the inner container body enters inside, passing through the inner container body, when the pressing pressure is released, thus leading to a possibility of the content being deteriorated.

As the synthetic resin multilayer bottle described above, a synthetic resin multilayer bottle using an outer shell bottle and an inner container body that are made of polyethylene as a multilayer container is in practical use. However, the polyethylene multilayer container poses a problem of poor transparency that causes difficulty in seeing a content. Further, there has been a demand for further improved oxygen barrier property of the multilayer container to suppress the deterioration of color and flavor of soy sauce, a liquid seasoning that contains soy sauce, or the like caused by the penetration of oxygen during long-term storage. For this reason, studies have been conducted to replace a polyethylene resin multilayer bottle by a polyester resin multilayer bottle that uses, for the outer shell bottle and the inner container body thereof, a PET resin exhibiting higher oxygen barrier property and higher transparency of resin than those of a polyethylene resin.

However, even if the outside air entering through the opening part of the inner container body is shut off to prevent the entry of oxygen through the opening part, inadequate preventive measures would not eliminate the inconvenient possibility of the oxygen in the outside air, which is introduced between the outer shell bottle and the inner container body entering inside when a pressing pressure is released, passing through the inner container body and entering inside, and causing the content to deteriorate. This would give rise to the problem described above. Hence, even the polyester resin multilayer bottle is required to have a multilayer container that has further enhanced oxygen barrier property in order to maintain the flavor of a content, suppress discoloration, and obtain excellent storage stability during long-term storage.

Accordingly, an object of the present invention is to provide a synthetic resin multilayer bottle which eliminates the inconvenience described above and which is capable of reliably preventing a content from deteriorating mainly due to the penetration of oxygen in outside air in a multilayer container that holds soy sauce or a content composed of a liquid seasoning that contains soy sauce held in an inner container body.

### Solution to Problem

To solve above-mentioned technical problem a synthetic resin multilayer bottle as defined in appended claim 1 is provided.

In the synthetic resin multilayer bottle in accordance with the present invention, the inner container body is deformed by volume reduction by deforming, by pressing, the trunk part of the outer shell bottle thereby to pour out the content, which is held in the inner container body, through the inner opening part. Thereafter, when the pressing pressure on the outer shell bottle is released, outside air is introduced between the outer shell bottle and the inner container body through the air channel, causing the outer shell bottle to restore the original shape thereof due to external air pressure, while keeping the inner container body in the volume reduction deformation state. Therefore, the synthetic resin multilayer bottle in accordance with the present invention can prevent the penetration of outside air into the inner container body through the inner opening part.

For composing the outer shell bottle and the inner container body in accordance with the present invention, an active barrier agent or an oxygen barrier agent publicly known as a passive barrier material can be used as an oxygen barrier agent which can be blended with a polyester resin and can block and capture oxygen. Especially, in the present invention, a polyamide-based resin and an oxygen scavenger are suitably used in combination in a polyester resin constituting the inner container body holding a content, and the amount used needs to be appropriately set according to the required quality of the content. For the synthetic resin multilayer bottle in accordance with the present invention to hold a content composed of a liquid seasoning that contains soy sauce, it is suited to properly blend an oxygen barrier agent in a resin for forming the inner container body so as to provide the synthetic resin multilayer bottle with oxygen permeability such that, after the inner container body is fully filled with distilled water from which dissolved oxygen has been removed, the inner opening part is sealed, and the distilled water is allowed to stand for 60 days at a temperature of 20°C while keeping the air channel between the outer shell bottle and the inner container body open, the amount of dissolved oxygen in the distilled water is 3 ppm or less.

Further, the synthetic resin multilayer bottle in accordance with the present invention has the oxygen permeability such that, after the inner container body is fully filled with distilled water from which dissolved oxygen has been removed, the inner opening part is sealed, and the distilled water is allowed to stand for 60 days at a temperature of 20°C while keeping the air channel between the outer shell bottle and the inner container body open, the amount of dissolved oxygen in the distilled water is 3 ppm or less. Therefore, even if outside air is introduced between the outer shell bottle and the inner container body through the air channel when the pressing pressure on the outer shell bottle is released, the possibility of the penetration of oxygen in the outside air into the inner container body of the synthetic resin multilayer bottle can be reduced.

In the synthetic resin multilayer bottle in accordance with the present invention, when the concentration of dissolved oxygen in the inner container body is compared between a normal use state in which the air channel between the outer shell bottle and the inner container body is open and a use state in which there is no outer shell bottle and only the inner container body is used, the comparison result indicates that the concentration of the dissolved oxygen can be maintained low for a long time in the use state of the multilayer bottle.

As a result, according to the synthetic resin multilayer bottle in accordance with the present invention, the use of the multilayer bottle further reliably prevents a content composed of a liquid seasoning that contains soy sauce held in the inner container body from deteriorating due to oxygen in outside air.

If the oxygen permeability is such that the amount of dissolved oxygen in the distilled water exceeds 3 ppm, then the synthetic resin multilayer bottle in accordance with the present invention cannot satisfactorily reduce or prevent the deterioration, including a color change, of a liquid seasoning held in the inner container body due to oxygen.

In order to provide the synthetic resin multilayer bottle according to the present invention with the foregoing oxygen permeability, the resin constituting the inner container body contains an oxygen barrier agent in the range of 3 to 10 percent by mass.

If the oxygen barrier agent contained in the resin constituting the inner container body is below 3 percent by mass, then the penetration of oxygen in outside air into the inner container body of the synthetic resin multilayer bottle cannot be satisfactorily reduced. Further, even if the content of the oxygen barrier agent contained in the resin constituting the inner container body exceeds 10 percent by mass, the oxygen barrier property exhibits little further change.

Further, in the synthetic resin multilayer bottle in accordance with the present invention, the oxygen barrier agent preferably contains a polyamide-based resin and a deoxidizer. The polyamide-based resin of the oxygen barrier agent blocks the penetration and passage of oxygen, or the deoxidizer binds to entered oxygen, thus making it possible to prevent the penetration of oxygen in outside air into the inner container body.

By using a polyester resin for making the synthetic resin multilayer bottle, the oxygen barrier agent is easily dispersed uniformly in the polyester resin constituting the inner container body, and in combination with the oxygen barrier property of the polyester resin, excellent oxygen barrier effect is exhibited.

### Brief Description of Drawings

FIG. 1 is a perspective view illustrating the configuration of a synthetic resin multilayer bottle in accordance with the present invention; and
FIG. 2 is a sectional view taken along line II-II of FIG. 1.

### Description of Embodiments

An embodiment of the present invention will now be described in further detail with reference to the accompanying drawings.

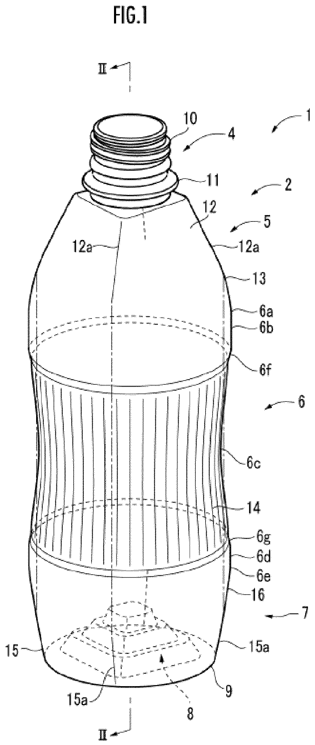

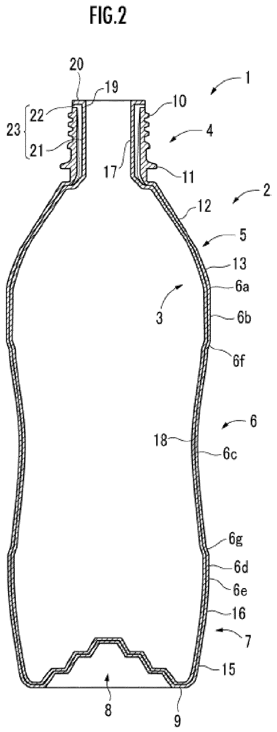

As illustrated in FIG. 1 and FIG. 2, a synthetic resin multilayer bottle 1 of the present embodiment is composed of an outer shell bottle 2 capable of restoring its original shape in response to deformation caused by pressing, and an inner container body 3 which is housed inside the outer shell bottle 2 and which deforms when pressed. The synthetic resin multilayer bottle 1 is used as a container that holds a content of, for example, 300 to 1000 milliliters.

Examples of the synthetic resin forming the synthetic resin multilayer bottle 1 include a synthetic resin mainly composed of a polyester made of an aromatic polycarboxylic acid and an aliphatic polyhydric alcohol, and a polyethylene terephthalate resin mainly composed of an ethylene terephthalate chain is particularly suitable. In addition, the synthetic resin mainly composed of the polyester exhibits higher toughness as the molecular weight increases, so that a resin having an intrinsic viscosity of at least 0.7 or more is suitable as the synthetic resin forming the synthetic resin multilayer bottle 1. Further, a synthetic resin recycled from the resin used for the synthetic resin bottle for beverage or food can be used for the outer shell bottle 2 that does not come in in direct contact with a content, thus enabling the synthetic resin multilayer bottle 1 to be a further reduced environmental load.

The outer shell bottle 2 has a cylindrical outer opening part 4, a shoulder part 5 gradually increasing in diameter from a lower end of the outer opening part 4, a trunk part 6 connected to the shoulder part 5, and a bottom part 7 which is connected to the trunk part 6 and the diameter of which is gradually reduced. The outer shell bottle 2 is provided with, on the inner peripheral side of the bottom part 7, a bottom recess part 8 which bulges toward the inner side of the outer shell bottle 2 to impart independence to the synthetic resin multilayer bottle 1. A ground contact part 9 is located between the bottom part 7 and the bottom recess part 8.

The outer opening part 4 is provided with an external thread part 10 and a support ring 11 on the outer circumferential surface, and the portion of the shoulder part 5 that is in contact with the outer opening part 4 has a first quadrangular pyramid-shaped part 12. Provided at the bottom of the first quadrangular pyramid-shaped part 12 is a trunk upper part 13, the diameter of which gradually increases from the first quadrangular pyramid-shaped part 12 toward the trunk part 6 and in which the corners of the quadrangular pyramid become smoother.

The trunk part 6 includes a first portion 6a which is connected to the trunk upper part 13 and the diameter of which changes from increasing to non-increasing, a first straight trunk portion 6b which is connected to the bottom of the first portion 6a and the diameter of which remains the same over a predetermined length, a cylindrical trunk portion 6c connected to the first straight trunk portion 6b, a second straight trunk portion 6d which is connected to the cylindrical trunk portion 6c and the diameter of which remains the same for a predetermined diameter, and a non-decreasing diameter portion 6e in which the second straight trunk portion 6d is connected to the bottom part 7 and before the diameter of the second straight trunk portion 6d changes to decreasing.

In the cylindrical trunk portion 6c, the section that is orthogonal to an axis is circular. The cylindrical trunk portion 6c is connected to the first straight trunk portion 6b via a stepped portion 6f and also connected to the second straight trunk portion 6d via a stepped portion 6g. The diameter of the stepped portion 6f gradually decreases from the first straight trunk portion 6b toward the cylindrical trunk portion 6c, and the diameter of the stepped portion 6g gradually decreases from the second straight trunk portion 6d toward the cylindrical trunk portion 6c.

Further, the cylindrical trunk portion 6c is shaped like a Japanese hand drum, in which the diameter gradually decreases from the lower end of the stepped portion 6f toward the central portion, and gradually increases from the central portion toward the upper end of the stepped portion 6g. In addition, the cylindrical trunk portion 6c is provided with a plurality of ribs 14 along an axial direction.

In the bottom part 7, the portion thereof in contact with the ground contact part 9 is formed of a second quadrangular pyramid-shaped part 15, and a trunk lower part 16 is provided on the upper side of the second quadrangular pyramid-shaped part 15. From the second quadrangular pyramid-shaped part 15 toward the second straight trunk portion 6d, the diameter of the trunk lower part 16 gradually increases and the corners of the quadrangular pyramid become smoother.

Further, the section of each of the first and the second quadrangular pyramid-shaped parts 12 and 15, which section is orthogonal to the axis, is quadrangular, and the vertices of the quadrangle are radiused and provided with ridge lines 12a and 15a. The ridge lines 15a are connected to the extensions of the ridge lines 12a.

Meanwhile, the inner container body 3 has a cylindrical inner opening part 17 provided on the inner circumferential side of the outer opening part 4, and an inner container main body 18 which is connected to the inner opening part 17 and which is shaped along the inner surface shapes of the shoulder part 5, the trunk part 6, the bottom part 7, the bottom recess part 8, and the ground contact part 9 of the outer shell bottle 2. The inner opening part 17 has thereon an extension part 19, which is extended upward beyond the upper end of the outer opening part 4, and a flange part 20 extended outward in the radial direction from the extension part 19. The inner opening part 17 is locked to the upper rim of the outer opening part 4 by the flange part 20.

Further, the inner opening part 17 has a vertical groove 21 on the outer circumferential surface thereof. The vertical groove 21 is connected to a horizontal groove 22 formed on the lower surface of the flange part 20, and the horizontal groove 22 is opened to outside at the outer circumferential edge of the flange part 20. As a result, the vertical groove 21 and the horizontal groove 22 form an air channel 23 through which outside air is introduced between the outer shell bottle 2 and the inner container body 3.

When the synthetic resin multilayer bottle 1 of the present embodiment is used, a content, which is not illustrated, is put in the inner container body 3. A pour-out cap provided with a check valve, which is not illustrated, is attached to a container opening part composed of the outer opening part 4 and the inner opening part 17. To pour out the content from the synthetic resin multilayer bottle 1, the outer opening part 4 and the inner opening part 17 are tilted downward, and the cylindrical trunk portion 6c of the outer shell bottle 2 is held and pressed. This causes the inner container main body 18 to be collapsed without reducing the surface area thereof, thus deforming by volume reduction thereby to pour out the content from the inner opening part 17 through the check valve.

Next, when the pressing pressure on the cylindrical trunk portion 6c of the outer shell bottle 2 is released, outside air is introduced through the air channel 23 between the outer shell bottle 2 and the inner container main body 18, and the outer shell bottle 2 restores the original shape thereof by the external air pressure, while the inner container main body 18 is maintained in the state of the volume reduction deformation due to the action of the check valve. As a result, outside air is prevented from entering into the inner container main body 18 through the inner opening part 17.

Meanwhile, there is concern that the oxygen in outside air may pass through and enter into the inner container main body 18, since the outside air is introduced between the outer shell bottle 2 and the inner container main body 18.

Hence, in the case of the inner container body 3 of the synthetic resin multilayer bottle 1 of the present embodiment, the resin constituting the inner container body 3 contains an oxygen barrier agent in an amount of 3 to 8 percent by mass to provide the inner container body 3 with oxygen permeability such that, after the inner container body 3 is fully filled with distilled water from which dissolved oxygen has been removed, the inner opening part 17 is sealed, and the distilled water is allowed to stand for 60 days at a temperature of 20°C while keeping the air channel between the outer shell bottle and the inner container body open, the amount of the dissolved oxygen in the distilled water is 3 ppm or less.

As a result, the synthetic resin multilayer bottle 1 can reduce the oxygen in outside air that penetrates inside through the inner container main body 18, thus making it possible to reliably prevent a content, which is composed of a liquid seasoning that contains soy sauce and which is stored in the inner container main body 18, from deteriorating due to the oxygen in the outside air.

The oxygen barrier agent preferably contains a polyamide-based resin and a deoxidizer. Examples of the polyimide-based resin include a resin that contains a polymer containing an m-xylylenediamine monomer unit, a p-xylylenediamine monomer unit, or a mixture thereof. Further, examples of the deoxidizer include at least one compound selected from a group consisting of cobalt, iron, nickel, copper, manganese, and mixtures thereof, or salts or complexes thereof. Examples of the oxygen barrier agent include ValOR (trade name) manufactured by Valspar Sourcing, Incorporated.

The synthetic resin multilayer bottle 1 of the present embodiment can be manufactured by placing an inner preform, which is obtained by injection molding of a synthetic resin composition mainly composed of a polyester containing the oxygen barrier agent in the range of 3 to 10 percent by mass, on the inner peripheral side of an outer preform, which is obtained by injection molding of a synthetic resin composition having, as a main constituent, a polyester composed of, for example, an aromatic polycarboxylic acid and an aliphatic polyhydric alcohol, and then by blow molding the outer preform and the inner preform at the same time.

Examples of the present invention and a comparative example will now be described.

### Examples

### [Example 1]

In this example, a synthetic resin multilayer bottle 1, which was shaped as illustrated in FIG. 1 and FIG. 2 and which had an amount of content of 500 milliliters, was manufactured by placing an inner preform, which was obtained by injection molding of a polyethylene terephthalate resin composition containing an oxygen barrier agent manufactured by Valspar Sourcing, Incorporated (trade name: ValOR A115J) in an amount of 3 percent by mass, on the inner peripheral side of an outer preform, which was obtained by injection molding of a polyethylene terephthalate resin composition, and then by blow molding the outer preform and the inner preform at the same time. In an inner container body 3 of the synthetic resin multilayer bottle 1 obtained in the present example, the resin constituting the inner container body 3 contains the oxygen barrier agent in an amount of 3 percent by mass.

Next, an air channel 23 of the synthetic resin multilayer bottle 1 obtained in the present example was set in an open state, an oxygen concentration measurement sensor chip was attached to the inner surface of an inner container main body 18, and the inner container body 3 was fully filled with distilled water. Then, the oxygen dissolved in the distilled water was removed by replacing the oxygen by an inert gas, and the distilled water was allowed to stand for 60 days at a temperature of 20°C, with an inner opening part 17 sealed by heat sealing aluminum foil. Thereafter, the concentration of the dissolved oxygen of the distilled water was measured by the sensor chip attached in advance to determine the amount of the dissolved oxygen, which is an indicator of the oxygen permeability. The measurement was performed using an oxygen concentration measurement device (trade name: Fibox3-Trace) manufactured by PreSens Corporation. Table 1 shows the result.

Subsequently, the air channel 23 of the synthetic resin multilayer bottle 1 obtained in the present example was set in an open state, and the inner container body 3 was fully filled with soy sauce (manufactured by KIKKOMAN CORPORATION), and the soy sauce was allowed to stand for 60 days at a temperature of 20°C, with the inner opening part 17 sealed by heat sealing aluminum foil. Thereafter, the color stability of the content was visually evaluated. The result is also illustrated in Table 1.

### [Example 2]

In the present example, a synthetic resin multilayer bottle 1 which was shaped as illustrated in FIG. 1 and FIG. 2 and which had an amount of content of 500 milliliters was manufactured using exactly the same method as that of Example 1 except that an inner preform which was obtained by injection molding of a polyethylene terephthalate resin composition containing an amount of 5 percent by mass of the oxygen barrier agent used in Example 1 was used. An inner container body 3 of the synthetic resin multilayer bottle 1 obtained in the present example contains the oxygen barrier agent in an amount of 5 percent by mass.

Subsequently, the concentration of dissolved oxygen in distilled water, which is an indicator of oxygen permeability, was measured using exactly the same method as that of Example 1 except that the synthetic resin multilayer bottle 1 obtained in the present example was used, and the color stability of a content was visually evaluated using exactly the same method as that of Example 1. The results are illustrated in Table 1.

### [Example 3]

In the present example, a synthetic resin multilayer bottle 1 which was shaped as illustrated in FIG. 1 and FIG. 2 and which had an amount of content of 500 milliliters was manufactured using exactly the same method as that of Example 1 except that an inner preform which was obtained by injection molding of a polyethylene terephthalate resin composition containing an amount of 7 percent by mass of the oxygen barrier agent used in Example 1 was used. An inner container body 3 of the synthetic resin multilayer bottle 1 obtained in the present example contains the oxygen barrier agent in an amount of 7 percent by mass.

Subsequently, the concentration of dissolved oxygen in distilled water, which is an indicator of oxygen permeability, was measured using exactly the same method as that of Example 1 except that the synthetic resin multilayer bottle 1 obtained in the present example was used, and the color stability of a content was visually evaluated using exactly the same method as that of Example 1. The results are illustrated in Table 1.

### [Example 4]

In the present example, a synthetic resin multilayer bottle 1 which was shaped as illustrated in FIG. 1 and FIG. 2 and which had an amount of content of 500 milliliters was manufactured using exactly the same method as that of Example 1 except that an inner preform which was obtained by injection molding of a polyethylene terephthalate resin composition containing an amount of 8 percent by mass of the oxygen barrier agent used in Example 1 was used. An inner container body 3 of the synthetic resin multilayer bottle 1 obtained in the present example contains the oxygen barrier agent in an amount of 8 percent by mass.

Subsequently, the concentration of dissolved oxygen in distilled water, which is an indicator of oxygen permeability, was measured in exactly the same method as that of Example 1 except that the synthetic resin multilayer bottle 1 obtained in the present example was used, and the color stability of the content was visually evaluated using exactly the same method as that of Example 1. The results are illustrated in Table 1.

### [Example 5]

In the present example, a synthetic resin multilayer bottle 1 which was shaped as illustrated in FIG. 1 and FIG. 2 and which had an amount of content of 500 milliliters was manufactured using exactly the same method as that of Example 1 except that an inner preform which was obtained by injection molding of a polyethylene terephthalate resin composition containing the oxygen barrier agent in an amount of 10 percent by mass used in Example 1 was used. An inner container body 3 of the synthetic resin multilayer bottle 1 obtained in the present example contains the oxygen barrier agent in an amount of 10 percent by mass. The synthetic resin multilayer bottle 1 obtained in the present example showed a tendency of slight deterioration in the transparency of the inner container body 3.

Subsequently, the concentration of dissolved oxygen in distilled water, which is an indicator of oxygen permeability, was measured using exactly the same method as that of Example 1 except that the synthetic resin multilayer bottle 1 obtained in the present example was used, and the color stability of a content was visually evaluated using exactly the same method as that of Example 1. The results are illustrated in Table 1.

### [Comparative Example]

In the present comparative example, a synthetic resin multilayer bottle 1 which was shaped as illustrated in FIG. 1 and FIG. 2 and which had an amount of content of 500 milliliters was manufactured using exactly the same method as that of Example 1 except that an inner preform that was obtained by injection molding of a polyethylene terephthalate resin composition containing no oxygen barrier agent used in Example 1 was used. An inner container body 3 of the synthetic resin multilayer bottle 1 obtained in the present comparative example contains no oxygen barrier agent mentioned above.

Subsequently, the concentration of dissolved oxygen in distilled water, which is an indicator of oxygen permeability, was measured using exactly the same method as that of Example 1 except that the synthetic resin multilayer bottle 1 obtained in the present comparative example was used, and the color stability of a content was visually evaluated using exactly the same method as that of Example 1. The results are illustrated in Table 1.

**[Table 1]**

| | Comparative Example | Examples | | | | |
|---|---|---|---|---|---|---|
| | | 1 | 2 | 3 | 4 | 5 |
| Concentration of dissolved oxygen in distilled water (ppm) | 7.0 or more | 2.3 | 1.3 | 0.3 | 0.24 | 0.24 or less |
| Color stability of content | ×~Δ | Δ~○ | ○ | ○ | ○ | ○ |

| | | | | | | |
|---|---|---|---|---|---|---|
| Color stability of content : ×~Δ...discolored; Δ~○... slightly discolored; ○...Not discolored | | | | | | |

Table 1 obviously indicates that the synthetic resin multilayer bottles 1 of Examples 1 to 4, which are provided with the oxygen permeability such that, after distilled water from which dissolved oxygen has been removed is fully filled, the inner opening part 17 is sealed, and the distilled water is allowed to stand for 60 days at a temperature of 20°C, the amount of dissolved oxygen in the distilled water is 3 ppm or less, are capable of exhibiting higher color stability of a content and therefore providing high effect for preventing the content from deteriorating, as compared with the synthetic resin multilayer bottle 1 of Comparative Example having oxygen permeability that causes the amount of dissolved oxygen in the distilled water to exceed 3 ppm and become 7.0 ppm or more.

### Description of Reference Numerals

1 ... synthetic resin multilayer bottle; 2 ... outer shell bottle; 3 ... inner container body; 4 ... outer opening part; 5 ... shoulder part; 6 ... trunk part; 7 ... bottom part; 17 ... inner opening part; 18 ... inner container main body; and 23 ... air channel.

## Claims

1. A synthetic resin multilayer bottle (1) comprising:
an outer shell bottle (2) which has a cylindrical outer opening part, a shoulder part (5) connected to the outer opening part (4), a trunk part (6) connected to the shoulder part (5), a bottom part (7) connected to the trunk part (6), and a ground contact part (9) connected to the bottom part (7), and which is capable of restoring an original shape thereof from deformation caused by pressing;
an inner container body (3) which has a cylindrical inner opening part (17) provided on an inner circumferential side of the outer opening part (4) of the outer shell bottle (2), and an inner container main body (18) connected to the inner opening part (17) and shaped along an inner surface shape of the outer shell bottle (2), and which deforms in response to pressing; and
an air channel (23) which is formed between the outer opening part (4) and the inner opening part (17) and through which outside air is introduced between the outer shell bottle (2) and the inner container body (3), a content composed of a liquid seasoning that contains soy sauce being held in the inner container body (3),
wherein
the outer shell bottle (2) and the inner container body (3) are composed of a polyester resin,
**characterized in that** the inner container body (3) contains an oxygen barrier agent in a range of 3 to 10 percent by mass of a resin constituting the inner container body (3), and
**in that** the synthetic resin multilayer bottle (1) has oxygen permeability such that, after the inner container body (3) is fully filled with distilled water from which dissolved oxygen has been removed, the inner opening part (17) is sealed, and the distilled water is allowed to stand for 60 days at a temperature of 20°C while keeping the air channel (23) between the outer shell bottle (2) and the inner container body (3) open, the amount of dissolved oxygen in the distilled water is 3 ppm or less.

2. The synthetic resin multilayer bottle (1) according to claim 1, wherein the oxygen barrier agent contains a polyamide-based resin and a deoxidizer.

## Patentansprüche

1. Mehrschichtflasche (1) aus synthetischem Harz, umfassend:
eine eine Außenhülle bildende Flasche (2), die einen zylindrischen äußeren Öffnungsteil, einen mit dem äußeren Öffnungsteil (4) verbundenen Schulterteil (5), einen mit dem Schulterteil (5) verbundenen Rumpfteil (6), einen mit dem Rumpfteil (6) verbundenen Bodenteil (7) und einen mit dem Bodenteil (7) verbundenen Bodenkontaktteil (9) aufweist und die in der Lage ist, ihre ursprüngliche Form nach einer durch Pressen verursachten Verformung wiederherzustellen,
einen inneren Behälterkörper (3), der einen zylindrischen inneren Öffnungsteil (17), der an einer inneren Umfangsseite des äußeren Öffnungsteils (4) der eine Außenhülle bildenden Flasche (2) vorgesehen ist, und einen inneren Behälterhauptkörper (18), der mit dem inneren Öffnungsteil (17) verbunden ist und entlang einer Innenoberflächenform der eine Außenhülle bildende Flasche (2) geformt ist, aufweist und der sich in Reaktion auf ein Pressen verformt, und
einen Luftkanal (23), der zwischen dem äußeren Öffnungsteil (4) und dem inneren Öffnungsteil (17) ausgebildet ist und durch den Außenluft zwischen die eine Außenhülle bildende Flasche (2) und den inneren Behälterkörper (3) eingeleitet wird, wobei ein Inhalt, der aus einer Sojasoße enthaltenden flüssigen Würzmischung zusammengesetzt ist, in dem inneren Behälterkörper (3) gehalten wird,
wobei die eine Außenhülle bildende Flasche (2) und der innere Behälterkörper (3) aus einem Polyesterharz zusammengesetzt sind,
**dadurch gekennzeichnet, dass**
der innere Behälterkörper (3) ein Sauerstoffbarrieremittel in einem Bereich von 3 bis 10 Massenprozent eines Harzes, das den inneren Behälterkörper bildet, enthält,
und dadurch, dass die Mehrschichtflasche aus synthetischem Harz (1) eine solche Sauerstoffdurchlässigkeit aufweist, dass, nachdem der innere Behälterkörper (3) vollständig mit destilliertem Wasser, aus dem gelöster Sauerstoff entfernt wurde, gefüllt wurde, der innere Öffnungsteil (17) versiegelt wurde und das destillierte Wasser 60 Tage bei einer Temperatur von 20 °C stehen gelassen wurde, während der Luftkanal (23) zwischen der eine Außenhülle bildende Flasche (2) und dem inneren Behälterkörper (3) offen gelassen wurde, die Menge an gelöstem Sauerstoff in dem destillierten Wasser 3 ppm oder weniger beträgt.

2. Mehrschichtflasche aus synthetischem Harz (1) gemäß Anspruch 1, wobei das Sauerstoffbarrieremittel ein Harz auf Polyamidbasis und ein Desoxidationsmittel enthält.

## Revendications

1. Bouteille multicouche en résine synthétique (1), comprenant :
une bouteille à coque externe (2) qui comporte une partie d'ouverture externe cylindrique, une partie d'épaulement (5) connectée à la partie d'ouverture externe (4), une partie de tronc (6) connectée à la partie d'épaulement (5), une partie de fond (7) connectée à la partie de tronc (6), et une partie de contact au sol (9) connectée à la partie de fond (7), et qui est capable de restaurer sa forme d'origine après une déformation causée par une pression ;
un corps de récipient interne (3) qui comporte une partie d'ouverture interne cylindrique (17) pourvue sur un côté circonférentiel interne de la partie d'ouverture externe (4) de la bouteille à coque externe (2), et un corps principal de récipient interne (18) connecté à la partie d'ouverture interne (17) et conformé le long d'une forme de surface interne de la bouteille à coque externe (2), et qui se déforme en réponse à une pression ; et
un canal d'air (23) qui est formé entre la partie d'ouverture externe (4) et la partie d'ouverture interne (17) et à travers lequel de l'air extérieur est introduit entre la bouteille à coque externe (2) et le corps de récipient interne (3), un contenu composé d'un assaisonnement liquide qui contient de la sauce soja étant contenu dans le corps de récipient interne (3),
dans laquelle la bouteille à coque externe (2) et le corps de récipient interne (3) sont composés d'une résine polyester,
**caractérisée en ce que** le corps de récipient interne (3) contient un agent barrière à l'oxygène dans une plage de 3 à 10 pour cent en masse d'une résine constituant le corps de récipient interne (3), et
**en ce que** la bouteille multicouche en résine synthétique (1) présente une perméabilité à l'oxygène telle que, après que le corps de récipient interne (3) est entièrement rempli d'eau distillée dont l'oxygène dissout a été éliminé, que la partie d'ouverture interne (17) est scellée, et que l'eau distillée est laissée au repos pendant 60 jours à une température de 20 °C tout en maintenant le canal d'air (23) entre la bouteille à coque externe (2) et le corps de récipient interne (3) ouvert, la quantité d'oxygène dissout dans l'eau distillée etant inférieure ou égale à 3 ppm.

2. Bouteille multicouche en résine synthétique (1) selon la revendication 1, dans laquelle l'agent barrière à l'oxygène contient une résine à base de polyamide et un désoxydant.
